(19) Europäisches Patentamt
European Patent Office
Office européen des brevets

(11) **EP 3 732 448 B1**

(12) **EUROPÄISCHE PATENTSCHRIFT**

(45) Veröffentlichungstag und Bekanntmachung des Hinweises auf die Patenterteilung:
**10.05.2023 Patentblatt 2023/19**

(21) Anmeldenummer: **18825968.3**

(22) Anmeldetag: **17.12.2018**

(51) Internationale Patentklassifikation (IPC):
**G01F 1/84** (2006.01)      **G01N 9/00** (2006.01)

(52) Gemeinsame Patentklassifikation (CPC):
**G01F 1/8472; G01F 1/8418; G01F 1/8436;**
G01F 1/8422; G01F 1/8427; G01N 9/002;
G01N 2009/006

(86) Internationale Anmeldenummer:
**PCT/EP2018/085199**

(87) Internationale Veröffentlichungsnummer:
**WO 2019/129522 (04.07.2019 Gazette 2019/27)**

(54) **MESSGERÄT VOM VIBRATIONSTYP MIT EINEM MESSROHR**

VIBRATORY MEASURING DEVICE HAVING A MEASURING TUBE

INSTRUMENT DE MESURE DU TYPE À VIBRATIONS MUNI D'UN TUBE DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2017 DE 102017012058**

(43) Veröffentlichungstag der Anmeldung:
**04.11.2020 Patentblatt 2020/45**

(73) Patentinhaber: **Endress + Hauser Flowtec AG**
**4153 Reinach (CH)**

(72) Erfinder:
• **SCHWENTER, Benjamin**
**4226 Breitenbach (CH)**
• **HUBER, Christof**
**3007 Bern (CH)**
• **SCHÜTZE, Christian**
**4055 Basel (CH)**
• **WIEST, Achim**
**79576 Weil am Rhein (DE)**

(74) Vertreter: **Hahn, Christian et al**
**Endress+Hauser Group Services (Deutschland)AG +Co. KG**
**Colmarer Straße 6**
**79576 Weil am Rhein (DE)**

(56) Entgegenhaltungen:
US-A- 4 803 867       US-A- 6 164 140
US-A1- 2007 095 151   US-A1- 2008 156 109
US-B1- 6 513 392      US-B2- 6 782 764

EP 3 732 448 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Messgerät vom Vibrationstyp mit einem Messrohr, insbesondere zum Bestimmen des Massedurchflusses und/oder der Dichte eines fließfähigen Mediums.

Gattungsgemäße Messaufnehmer sind beispielsweise beschrieben in DE 10 2005 059 070 A1 und EP 1 223 412 A1.

Messgeräte mit gebogenen Messrohren sind meistens dazu eingerichtet in Biegeschwingungsnutzmoden senkrecht zu einer Messrohrebene angeregt zu werden, in welcher eine Messrohrmittenlinie des gebogenen Messrohrs verläuft. Dies ist bei Messaufnehmern mit zwei parallel verlaufenden Messrohren insofern unproblematisch, als die beiden Messrohre im Wesentlichen symmetrisch zu einer Messaufnehmermittenebene schwingen, wodurch sich die Trägheitskräfte der schwingenden Messrohre gegenseitig ausgleichen, im Ergebnis wird daher kaum Schwingungsenergie aus dem Messaufnehmer ausgekoppelt. Bei Messaufnehmern mit nur einem gebogenen Messrohr sind Biegeschwingungsnutzmoden senkrecht zur Messrohrebene jedoch insofern problematisch, als diese nicht ohne weiteres ausbalanciert sind, weshalb es zur Auskopplung von Schwingungsenergie kommen kann. Um diesen Effekt zu reduzieren offenbart EP 1 223 412 A1 einen Messaufnehmer mit einem trapezförmig gebogenen Messrohr, dass dazu eingerichtet ist zu Biegeschwingungsnutzmoden in der Messrohrebene angeregt zu werden. Die Anregung kann auch durch Piezoerreger erfolgen.

US 2007 / 009 51 51 offenbart ein Coriolis-Massedurchflussmessgerät mit einem Messrohr und einem, bezogen auf die Messrohrlängsrichtung in der Mitte angeordneten ersten Erreger sowie einer weiteren Erregeranordnung, mit zwei Erregern die symmetrisch zum ersten Erreger in Messrohrlängsrichtung beabstandet sind. Die Erreger der zweiten Erregeranordnung können das Messrohr gegenphasig zum ersten Erreger anregen, wodurch ein andere Schwingungsmode als die Grundmode anzuregen ist.

US 6 782 764 B2 offenbart ein Coriolis-Massedurchflussmessgerät mit einem gebogenen Messrohr und zwei Erregern, die das Messrohr zu Schwingungen senkrecht zur Messrohrebene anregen, sowie zwei Schwingungssensoren. Die Schrift offenbart zudem ein Ausführungsbeispiel einer Schwingungssensoranordnung mit zwei Schwingungssensoren zur separaten Erfassung von Schwingungen in der Messrohrebene und senkrecht zur Messrohrebene.

Flüssige Messmedien welche Gasblasen enthalten, insbesondere in Form von Mikroblasen, welche in dem Messmedium suspendiert sind, können eine Messung beeinträchtigen, da die Mikroblasen die Kompressibilität des Messmediums erheblich vergrößern aber einen geringen Einfluss auf dessen effektive Dichte haben. Dies führt zu einer stark reduzierten Schallgeschwindigkeit bzw. Resonanzfrequenz, mit welcher das Messmedium gegen das Messrohr schwingen kann. Wenn sich die Resonanzfrequenz einer Nutzmodeeigenfrequenz annähert wird letztere dadurch verändert und die Schwingung in der Biegeschwingungsnutzmode wird stark bedämpft. Hieraus ergibt sich für den Sensorentwurf ein Dilemma, denn einerseits bietet eine Beeinflussung einer Schwingungsmode durch das Medium einen Ansatzpunkt durch das Medium einen Ansatzpunkt, Informationen über Medieneigenschaften zu gewinnen, andererseits kann die Beeinflussung einer Biegeschwingungsmode so stark sein, dass ihre Anregung nicht mehr möglich ist. Dies kann zunächst bei Biegeschwingungsnutzmoden in der Messrohrebene relevant sein, da diese gewöhnlich eine höhere Nutzmodeeigenfrequenz aufweisen als Biegeschwingungsnutzmoden senkrecht zur Messrohrebene.

Es ist daher die Aufgabe der vorliegenden Erfindung, hier Abhilfe zu schaffen.

Die Aufgabe wird gelöst durch das Messgerät gemäß dem unabhängigen Patentanspruch 1.

Das erfindungsgemäße Messgerät umfasst:

ein in seiner Ruhelage gebogenes, schwingfähiges Messrohr zum Führen eines Mediums, wobei das Messrohr eine in einer Messrohrebene verlaufende Messrohrmittenlinie aufweist;

einen Trägerkörper;

einen ersten, einlaufseitigen Lagerkörper;

einen zweiten, auslaufseitigen Lagerkörper;

eine erste, einlaufseitige Erregereinheit;

eine zweite, auslaufseitige Erregereinheit;

eine erste, einlaufseitige Sensoreinheit;

eine zweite, auslaufseitige Sensoreinheit; und

eine Betriebs- und Auswerteschaltung;

wobei der erste und zweite Lagerkörper mit dem Trägerkörper verbunden sind, wobei das Messrohr an dem ersten und zweiten Lagerkörper in der Weise gelagert ist, dass Biegeschwingungsmoden des Messrohrs an den Lagerkörpern Schwingungsknoten aufweisen,

wobei die erste und zweite Erregereinheit jeweils dazu eingerichtet sind, in Abhängigkeit von Erregersignalen Biegeschwingungen des Messrohrs sowohl in der Messrohrebene als auch senkrecht zur Messrohrebene anzuregen,

wobei die erste und zweite Sensoreinheit jeweils dazu eingerichtet sind, Biegeschwingungen des Messrohrs sowohl in der Messrohrebene als auch senkrecht zur Messrohrebene zu erfassen und schwingungsabhängige Sensorsignale auszugeben,

wobei die Betriebs- und Auswerteschaltung, dazu eingerichtet ist Erregersignale an die Erregereinheiten zum selektiven Anregen von Biegeschwingungsmoden auszugeben und die Sensorsignale der Sensoreinheiten zu empfangen.

In einer Weiterbildung der Erfindung wobei die Messrohrmittenlinie entweder bezüglich einer Messrohrquerebene, welche senkrecht zur Messrohrebene steht, symmetrisch verläuft, oder bezüglich einer Symmetrieachse die senkrecht zur Messrohrebene verläuft eine zweizählige Rotationssymmetrie aufweist, wobei die Betriebs- und Auswerteschaltung dazu eingerichtet ist, Erregersignale an die Erregereinheiten auszugeben, um symmetrische Biegeschwingungsmoden und/oder antisymmetrische Biegeschwingungsmoden, insbesondere mit antisymmetrischer Auslenkung anzuregen und/oder auszuwerten.

Durch Anregung von Biegeschwingungsmoden in der Messrohrebene und senkrecht dazu steht ein größerer Vorrat an möglichen Eigenfrequenzen zur Verfügung, die einerseits nahe genug an der Resonanzfrequenz des Mediums sind, um von dieser beeinflusst zu werden, und andererseits noch nicht zu stark gedämpft werden. Insofern können stets zwei oder mehr Biegeschwingungsmoden angeregt werden, deren Schwingungsverhalten es ermöglicht, Medieneigenschaften, wie dessen Schallgeschwindigkeit, Gasbeladung und Dichte zuverlässig zu bestimmen.

In einer Weiterbildung der Erfindung sind die Erregereinheiten und Sensoreinheiten angrenzend an die Lagerkörper angeordnet oder in diese integriert. Auf diese Weise lässt sich ein Idealzustand, dass die Erregereinheiten und Sensoreinheiten für die N Biegeschwingungsmoden mit den N niedrigsten Eigenfrequenzen einen Schwingungsknoten aufweisen, am einfachsten annähern, hierbei kann N beispielsweise nicht weniger als 5, insbesondere nicht weniger als 8 betragen. Wenn die Erregereinheiten und/oder Sensoreinheiten für eine Biegeschwingungsmode einen Schwingungsknoten aufweisen, können Sie diesen besonders effektiv anregen bzw. erfassen.

In einer Weiterbildung der Erfindung weist das Messrohr zwischen der ersten Erregereinheit und der zweiten Erregereinheit bzw. zwischen der ersten Sensoreinheit und der zweiten Sensoreinheit eine homogene Massenverteilung auf, wobei an einem Trimmpunkt am Ort eines Schwingungsknotens antisymmetrischer Biegeschwingungsmoden eine Abweichung von der homogenen Massenverteilung gegeben ist, und/oder symmetrisch dazu an zwei zu einander symmetrischen Schwingungsknoten einer symmetrischen Biegeschwingungsmode eine Abweichung von der homogenen Massenverteilung gegeben ist. Die Abweichung von der homogenen Masseverteilung wird insbesondere jeweils mittels einer Zusatzmasse bewirkt. Damit wird eine Absenkung der Eigenfrequenzen jener Schwingungsmoden erzielt, die am Ort der Zusatzmasse keinen Schwingungsknoten aufweisen, während jene Moden, bei denen ein Schwingungsknoten mit der Zusatzmasse zusammenfällt von letzterer kaum beeinflusst sind. Somit lassen sich mittels der Zusatzmassen Frequenzabstände zwischen Schwingungsmoden kontrolliert beeinflussen.

In einer Weiterbildung der Erfindung weisen die Biegeschwingungsmoden Eigenfrequenzen $f_i$ auf, wobei jeweils eine von einer Anregungsfrequenz $f_a$ abhängige Amplitude $A_i$ einer Biegeschwingungsmode gegeben ist als

$$A_i(f_a, f_i, Q_i) = \frac{k_i}{\left[\left(1-\left(\frac{f_a}{f_i}\right)^2\right)^2 + \left(\frac{\left(\frac{f_a}{f_i}\right)}{Q_i}\right)^2\right]^{1/2}},$$

wobei ki eine modenspezifische Konstante ist, wobei $Q_i$ eine modenspezifische Güte des Messrohrs beschreibt, wobei für die N Biegungsschwingungsmoden mit den N niedrigsten Eigenfrequenzen $f_i$, $f_j$ gilt:

$$\frac{A_i\left(\frac{f_i+f_j}{2}, f_i, Q_i\right)}{k_i \cdot Q_i} < s,$$

mit s < 2%, beispielsweise s < 1%, insbesondere s < 0,5%, und
mit N ≥ 5, beispielsweise N ≥ 8, insbesondere N ≥ 10.

In einer Weiterbildung der Erfindung ist die Betriebs und Auswerteschaltung dazu eingerichtet ist, nur solche Biegungsschwingungsmoden mit Eigenfrequenzen $f_i$ $f_j$ anzuregen, für die gilt:

$$\frac{A_i\left(\frac{f_i+f_j}{2}, f_i, Q_i\right)}{k_i \cdot Q_i} < s,$$

mit s < 1%, beispielsweise s < 0,5%, insbesondere s < 0,25%.

In einer Weiterbildung der Erfindung weist das Messrohr einen Innendurchmesser auf, der nicht mehr als 4 mm, beispielsweise nicht mehr als 2 mm, insbesondere nicht mehr als 1 mm und in besonderen Fällen nicht mehr als 0,5 mm beträgt.

In einer Weiterbildung der Erfindung umfassen die Erregereinheiten jeweils mindestens zwei piezoelektrische Elemente, die selektiv von der Betriebs- und Auswerteschaltung mit einem Erregersignal zu treiben sind.

In einer Weiterbildung der Erfindung umfassen die Sensoreinheiten jeweils mindestens zwei piezoelektrische Elemente deren Signale von der Betriebs- und Auswerteschaltung, erfassbar sind.

In einer Weiterbildung der Erfindung sind die erste Sensoreinheit und die erste Erregereinheit in eine erste Sensor-Erreger-Einheit integriert, und die zweite Sensoreinheit und die zweite Erregereinheit sind in eine zweite Sensor-Erreger-Einheit integriert.

In einer Weiterbildung der Erfindung weisen die Sensor-Erreger-Einheiten piezoelektrische Elemente auf, die jeweils dazu eingerichtet sind, sowohl als Erreger als auch als Sensor zu wirken.

In einer Weiterbildung der Erfindung weisen die Sensor-Erreger-Einheiten erste piezoelektrische Elemente auf, die dazu eingerichtet sind als Erreger zu wirken, und wobei die Sensor-Erreger-Einheiten zweite piezoelektrische Elemente aufweisen, die dazu eingerichtet sind als Sensor zu wirken.

Die Erfindung wird nun anhand der in den Zeichnungen dargestellten Ausführungsbeispiele näher erläutert. Es zeigt:

Fig. 1: ein erstes Ausführungsbeispiel eines Messaufnehmers eines erfindungsgemäßen Messgerätes;

Fig. 2: ein zweites Ausführungsbeispiel eines Messaufnehmers eines erfindungsgemäßen Messgerätes;

Fig. 3a: ein erstes Ausführungsbeispiel einer Sensor- und Erregereinheit in Seitenansicht;

Fig. 3b: die Sensor- und Erregereinheiten des in Fig 2 dargestellten Messaufnehmers;

Fig. 3c: eine Anordnung von Piezo-Elementen eines weiteren Ausführungsbeispiels einer Sensor- und Erregereinheit in Aufsicht;

Fig. 3d: eine Anordnung von Piezo-Elementen eines weiteren Ausführungsbeispiels einer Sensor- und Erregereinheit in Aufsicht;

Fig. 4a: Auslenkungen eines U-Förmigen Messrohrs bei verschiedenen Biegeschwingungsmoden; und

Fig. 4b: Auslenkungen eines S-Förmigen Messrohrs bei verschiedenen Biegeschwingungsmoden.

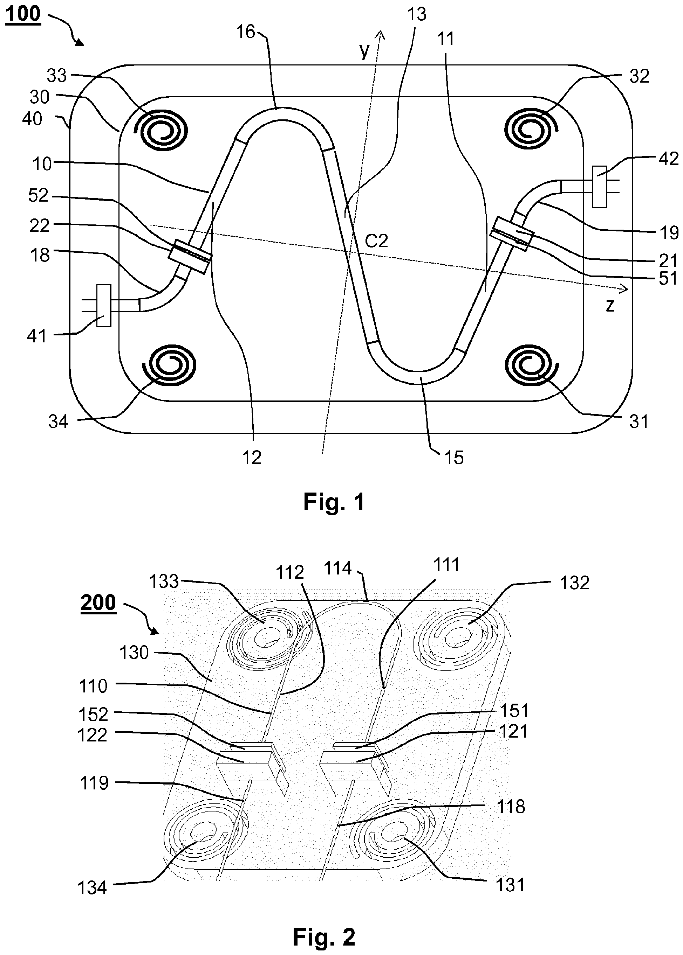

Das in Fig 1. dargestellte erste Ausführungsbeispiel eines Messaufnehmers 100 eines erfindungsgemäßen Messgerätes umfasst ein insbesondere einstückiges Messrohr, auch Messrohrleitung 10 genannt, mit einem ersten geraden äußeren Abschnitt 11 einem zweiten geraden äußeren Abschnitt 12 und einen zentralen geraden Abschnitt 13 sowie einen ersten gebogenen Abschnitt 15 und einen zweiten gebogenen Abschnitt 16. Die beiden geraden äußeren Abschnitte 15, 16 sind jeweils mittels eines der gebogenen Abschnitte 15, 16 mit dem zentralen geraden Abschnitt 13 verbunden. Die Messrohrleitung 10 ist durch zwei Lagerkörper 21, 22 begrenzt, und mit letzteren an einer biegesteifen Trägerplatte 30 befestigt. Die Messrohrleitung 10 verläuft im Wesentlichen in einer zur Trägerplatte 30 parallelen Rohrleitungsebene, welche durch eine Y-Achse und eine Z-Achse aufgespannt wird. Die Messrohrleitung weist eine zweizählige Rotationssymmetrie um eine Symmetrieachse auf, die senkrecht zur Rohrleitungsebene durch einen Punkt C2 in der Mitte des zentralen Rohrleitungsabschnitts im Schnittpunkt von Y-Achse und Z-Achse verläuft. Die Messrohrleitung hat einen Innendurchmesser von beispielsweise 5 mm oder weniger. Es ist aus einem Metall, insbesondere Edelstahl oder Titan gefertigt. Die metallische Trägerplatte 30 weist eine Stärke von beispielsweise 5 mm auf. Die Trägerplatte 30 weist vier spiralförmige Federlager 31, 32, 32, 33, 34 auf, die insbesondere mittels eines Lasers freigeschnitten sind, und die zueinander ebenfalls die zweizählige Rotationssymmetrie bezüglich der Symmetrieachse durch den Punkt C2 aufweisen. Mit hier nicht dargestellten Lagerbolzen, die im Zentrum der Federlager fixiert sind, ist die Trägerplatte 30 an einer Gehäuseplatte 40 eines Messaufnehmergehäuses verankert. Die effektive Steifigkeit der Federlager ergibt sich aus der Länge der spiralförmigen Einschnitte sowie deren Breite im Verhältnis zur Breite des verbleibenden Materials der Trägerplatte 30. Im ihrem Zentrum weisen die Federlager jeweils eine Bohrung zur Aufnahme eines Lagerbolzens auf.

Durch die Federlager 31, 32, 33, 34 weist die Trägerplatte 30 drei Translationsschwingungsfreiheitsgrade und drei Rotationsschwingungsfreiheitsgrade auf, deren Eigenfrequenzen mindestens 70 Hz betragen, um Resonanzschwingungen mit häufig in Prozessanlagen vorkommenden Vibrationen von bis zu 50 Hz zu vermeiden. Um die durch die Federlager 31, 32, 33, 34 erreichte weiche Aufhängung der Trägerplatte nicht zu beeinträchtigen, ist die Messrohrleitung über einen hinreichend weichen Leitungseinlaufabschnitt 18 und einen hinreichend weichen Leitungsauslaufabschnitt 19 an eine Rohrleitung anschließbar. Das Gehäuse weist einen erstes und zweites Gehäuselager 41, 42 auf, die fest mit der Gehäuseplatte 40 verbunden sind, und an denen der Leitungseinlaufabschnitt 18 und der Leitungsauslaufabschnitt 19 fixiert sind, um eine Übertragung von Schwingungen der Rohrleitung auf die Messrohrleitung über den Leitungseinlaufabschnitt 18 und den Leitungsauslaufabschnitt 19 zu unterdrücken. Die Translations- und Rotationsschwingungsfreiheitsgrade der Trägerplatte 20 haben jeweils Eigenfrequenzen $f_i$, die proportional sind zur Wurzel aus einem Quotienten aus einer Richtgröße $k_i$ und einem Trägheitsterm $m_i$, also $f_i \propto (k_i/m_i)^{1/2}$. Der Leitungseinlaufabschnitt 18 und der Leitungsauslaufabschnitt tragen in Summe nicht mehr als 10% zur jeweiligen Richtgröße $k_i$ bei. In Fig.1 sind der Leitungseinlaufabschnitt 18 und der Leitungsauslaufabschnitt 19 im Wesentlichen schematisch dargestellt. Durch zusätzliche Rohrlänge und Bögen die kann Steifigkeit und damit der Beitrag zu den jeweiligen Richtgrößen reduziert werden.

Der Leitungseinlaufabschnitt und der Leitungsauslaufabschnitt sind zueinander symmetrisch der C2-Symmetrie genügend gestaltet.

Der Messaufnehmer 100 weist zum Anregen und Erfassen von Biegeschwingungsmoden der Messrohrleitung eine erste piezoelektrische Erreger- und Sensoreinheit und eine zweite piezoelektrische Erreger- und Sensoreinheit 52 auf, die jeweils von einem der Lagerkörper 21, 22 gehalten werden. Einzelheiten dazu werden weiter unten erläutert.

Das in Fig 2. dargestellte zweite Ausführungsbeispiel eines Messaufnehmers 200 eines erfindungsgemäßen umfasst ein insbesondere einstückiges Messrohr, auch Messrohrleitung 110 genannt, mit einem ersten geraden Abschnitt 111 einem zweiten geraden Abschnitt 112 und einen gebogenen Abschnitt 114, der die beiden geraden Abschnitte 111, 112 miteinander verbindet. Die Messrohrleitung 110 ist durch zwei Lagerkörper 121, 122 begrenzt, und mit letzteren an einer biegesteifen Trägerplatte 130 befestigt. Die Messrohrleitung 110 verläuft im Wesentlichen in einer zur Trägerplatte 130 parallelen Rohrleitungsebene. Senkrecht zur Rohrleitungsebene verläuft eine Spiegelebene durch den Scheitelpunkt des gebogenen Abschnitts 114. Die Messrohrleitung hat einen Innendurchmesser von beispielsweise 5 mm oder weniger. Es ist aus einem Metall, insbesondere Edelstahl oder Titan gefertigt. Die metallische Trägerplatte 130 weist eine Stärke von beispielsweise 5 mm auf. Die Trägerplatte 130 weist vier spiralförmige Federlager 131, 132, 132, 133, 134 auf, die insbesondere mittels eines Lasers freigeschnitten sind, und die paarweise zueinander bezüglich der Spiegelebene symmetrisch sind. Ähnlich wie beim ersten Ausführungsbeispiel kann die Trägerplatte 130 an einer Gehäuseplatte eines Messaufnehmergehäuses verankert werden. Die effektive Steifigkeit der Federlager ergibt sich aus der Länge der spiralförmigen Einschnitte sowie deren Breite im Verhältnis zur Breite des verbleibenden Materials der Trägerplatte 130. Im Zentrum weisen die Federlager jeweils eine Bohrung zur Aufnahme eines Lagerbolzens auf. Zur Funktion und Dimensionierung der Federlager gelten die Ausführungen zum ersten Ausführungsbeispiel sinngemäß.

Um die durch die Federlager 131, 132, 133, 134 erreichte weiche Aufhängung der Trägerplatte 130 nicht zu beeinträchtigen, ist die Messrohrleitung über einen hinreichend weichen Leitungseinlaufabschnitt 118 und einen hinreichend weichen Leitungsauslaufabschnitt 119 an eine Rohrleitung anschließbar. Der Leitungseinlaufabschnitt 118 und der Leitungsauslaufabschnitt 119 sind vorzugsweise an der Gehäuseplatte oder anderen Komponenten des Gehäuses fixiert, um die Übertragung von Schwingungen der Rohrleitung auf die Messrohrleitung über den Leitungseinlaufabschnitt 118 und den Leitungsauslaufabschnitt 119 zu unterdrücken.

In Fig.2 sind der Leitungseinlaufabschnitt 118 und der Leitungsauslaufabschnitt 119 im Wesentlichen schematisch dargestellt. Durch zusätzliche Rohrlänge und Bögen die kann Steifigkeit und damit der Beitrag zu den jeweiligen Richtgrößen reduziert werden. Der Leitungseinlaufabschnitt und der Leitungsauslaufabschnitt sind zueinander bezüglich der Spiegelebene symmetrisch gestaltet.

Der Messaufnehmer 200 weist zum Anregen und Erfassen von Biegeschwingungsmoden der Messrohrleitung eine erste piezoelektrische Erreger- und Sensoreinheit und eine zweite piezoelektrische Erreger- und Sensoreinheit 152 auf, die jeweils von einem der Lagerkörper 121, 122 gehalten werden. Einzelheiten dazu werden weiter unten erläutert.

Anstelle des in Fig. 2 dargestellten U-förmigen Verlaufs, kann die Messrohrleitung auch andere spiegelsymmetrische Formen aufweisen, beispielsweise eine V-Form, eine W-Form oder eine Omega-Form.

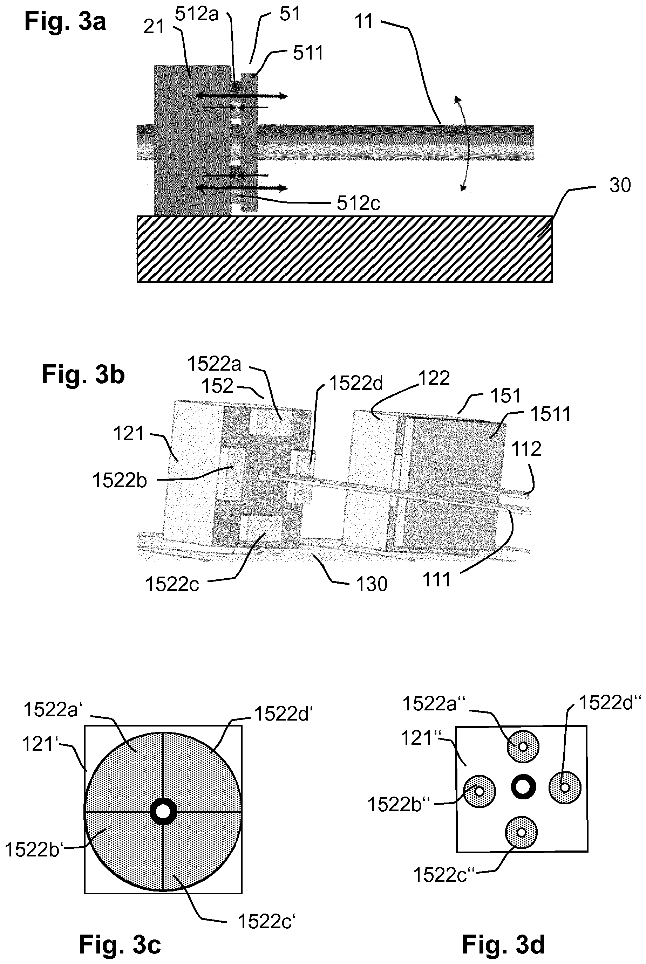

Fign. 3a bis 3d zeigen verschiedene Ausgestaltungen von Sensoreinheiten bzw. Erregereinheiten von Messaufnehmern erfindungsgemäßer Messgeräte.

Das Prinzip piezoelektrischer Anregung und Sensorik wird anhand der in Fig 3a dargestellten piezoelektrischen Sensor-Erreger-Einheit 51 erläutert. Zwischen einem Lagerkörper 21, der einen Messrohrleitungsabschnitt 11 an einem Trägerkörper 30 verankert und einer Deckplatte 511 der Sensor-Erreger-Einheit 51 sind piezoelektrische Elemente 512a, 512b oberhalb und unterhalb des Messrohrleitungsabschnitts eingespannt. Die Deckplatte 511 ist fest mit dem Messrohrleitungsabschnitt 511 verbunden. Durch Anlegen alternierender Spannungen an mindestens eines der beiden piezoelektrische Elemente 512a, 512b wird die Deckplatte 511 periodisch verkippt und ein Biegemoment wird in den Messrohrleitungsabschnitt 11 eingeleitet. Dadurch kann eine Messrohrleitung, zu welcher der Messrohrleitungsabschnitt gehört, zu Biegeschwingungen angeregt werden. Da der schwingende Messrohrleitungsabschnitt 11 seinerseits über die Deckplatte 511 oszillierende mechanische Spannungen in die piezoelektrischen Elemente 512a, 512b einleitet, kann an einem oder beiden piezoelektrischen Elementen ein Signal abgegriffen werden, welches eine Funktion der Biegeschwingungen ist.

Ein Vorteil dieser Art der Anregung und Messung besteht darin, dass keine zusätzlichen schwingenden Massen auf dem Messrohr für Sensoren oder Erreger zu montieren sind. Dies ist besonders vorteilhaft für Messrohre mit kleinen bis sehr kleinen Durchmessern, beispielsweise DN<0 4 mm bzw. DN <0 1 mm bzw. DN < = 0.5 mm.

Insofern als alle Biegeschwingungsmoden am Lagerkörper 21 einen Schwingungsknoten haben, können mit der Sensor-Erreger-Einheit 51 alle fundamentalen Biegeschwingungsmoden angeregt und Moden zur Messung verwendet werden.

Durch das Positionieren von 2x2 Piezoelektrischen Elementen an den Lagerkörpern lassen sich "inplane" Moden der Rohrleitungsebene sowie "out-of-plane" Moden senkrecht dazu gleichermaßen und gleichzeitig anregen und erfassen. Entsprechende Anordnungen sind in Fign. 3b, 3c, und 3d dargestellt, in denen jeweils vier Piezoelemente 1522a, 1522b, 1522c, 1522d; 1522a', 1522b', 1522c', 1522d'; 1522a", 1522b", 1522c", 1522d" an einem Lagerkörper 121; 121'; 121" angeordnet sind. Hierbei sind jeweils die Piezoelemente a und c bzw. b und d einander gegenüberliegend angeordnet.

Zum Anregen einer ausgewählten Biegeschwingungsmode kann das passende Paar der einander gegenüberliegenden piezoelektrischen Elemente alternierend mit einem Erregersignal beaufschlagt werden oder nur eines, während das andere Piezoelement des Paares als Sensor dient. Es können aber auch beide gegenüberliegende Piezoelemente eines Paares sowohl als Erregerelement als auch als Sensorelement dienen. Die Anordnungen in Fig 3b und 3d können noch dadurch vereinfacht werden, dass von den in den Zeichnungen dargestellten piezoelektrischen Elementen eines Paares jeweils nur eines behalten wird, nämlich eines zum Anregen von In Plane Moden, beispielsweise das mit "b" gekennzeichnete Element, und eines zum Anregen und Erfassen von Out of Plane Moden, beispielsweise das mit "a" gekennzeichnete Element. Selbstverständlich sind beim hier nicht dargestellten anderen Lagerkörper die zwei Piezoelemente so zu positionieren, dass sie bezüglich der Symmetrie des Messrohrs zu den Piezoelementen am dargestellten Lagerkörper symmetrisch sind. Die Piezoelemente können durch Kleben, Klemmen (Fign.3a, 3b, 3c, 3d) und/oder Schrauben (Fig. 3d) zwischen Deckplatte und Lagerkörper fixiert sein.

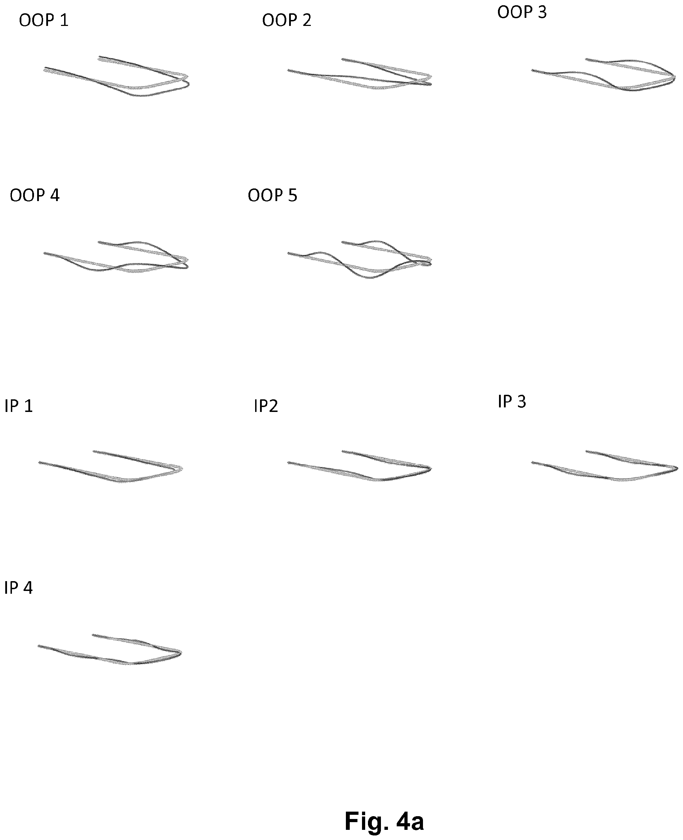

Fig. 4a zeigt die Auslenkungen eines U-förmigen Messrohrs eines erfindungsgemäßen Messgerätes. Genauer sind Auslenkungen von fünf Out of Plane Moden OOP 1 bis und OOP 5 senkrecht zur Ebene der Messrohrleitung und vier In Plane Moden IP 1 bis IP 4 in der Ebene der Messrohrleitung dargestellt. Sämtliche dieser Moden können beim Erfindungsgemäßen Messgerät angeregt und ausgewertet werden. Damit stehen neun Frequenzen zwischen wenigen 100 Hz und 3 KHz zur Verfügung, um Durchfluss, Dichte und weitere Medieneigenschaften zu bestimmen. Es ist ersichtlich, dass die geradzahligen OOP-Moden im Scheitelpunkt des Messrohrbogens einen Schwingungsknoten aufweisen. Das Anbringen eines kleinen zusätzlichen Massekörpers am Scheitelpunkt wird die Frequenz der geradzahligen OOP-Moden kaum beeinflusst, aber die Frequenzen der anderen Moden können verschoben werden. Auf diese Weise kann der Abstand der Frequenzen eingestellt werden, um Übersprechen zwischen Biegeschwingungsmoden zu verhindern. Gleichermaßen können Massekörper symmetrisch an Schwingungsknoten angebracht werden. Beispielsweise bei den bogennahen Schwingungsknoten von OOP 5.

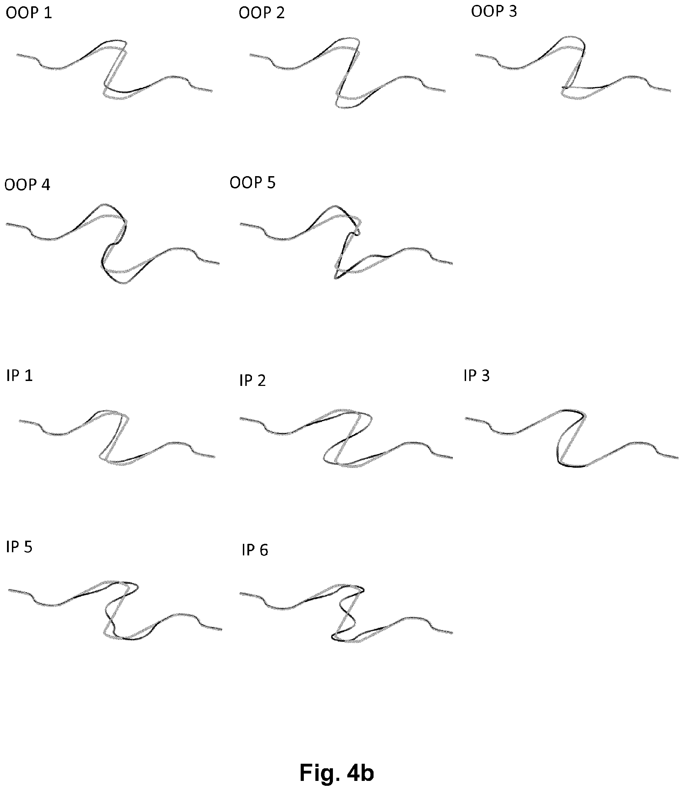

Fig. 4b zeigt die Auslenkungen eines S-förmigen Messrohrs eines erfindungsgemäßen Messgerätes. Genauer sind Auslenkungen von fünf Out of Plane Moden OOP 1 bis und OOP 5 senkrecht zur Ebene der Messrohrleitung und fünf In Plane Moden IP 1 bis IP 6 in der Ebene der Messrohrleitung dargestellt. Sämtliche dieser Moden können beim Erfindungsgemäßen Messgerät angeregt und ausgewertet werden. Damit stehen zehn Frequenzen zwischen wenigen 100 Hz und mehreren KHz zur Verfügung, um Durchfluss, Dichte und weitere Medieneigenschaften zu bestimmen. Es ist ersichtlich, dass die sämtliche geradzahlige Moden im Symmetriezentrum der C2-Symmetrie einen Schwingungsknoten aufweisen. Das Anbringen eines kleinen zusätzlichen Massekörpers an diesem Scheitelpunkt wird die Frequenz der geradzahligen OOP-Moden kaum beeinflusst, aber die Frequenzen der ungeradzahligen Moden können verschoben werden. Auf diese Weise kann der Abstand der Frequenzen eingestellt werden, um Übersprechen zwischen Biegeschwingungsmoden zu verhindern. Gleichermaßen können Massekörper symmetrisch an Schwingungsknoten angebracht werden.

## Patentansprüche

1.  Messgerät (100; 200) vom Vibrationstyp zum Bestimmen eines Massedurchflusses oder einer Dichte eines fließfähigen Mediums, umfassend:

    ein in seiner Ruhelage gebogenes, schwingfähiges Messrohr (10; 110) zum Führen eines Mediums, wobei das Messrohr (10; 110) eine in einer Messrohrebene verlaufende Messrohrmittenlinie aufweist;
    einen Trägerkörper (30; 130);
    einen ersten, einlaufseitigen Lagerkörper (21; 121);
    einen zweiten, auslaufseitigen Lagerkörper (22; 122);
    eine erste, einlaufseitige Erregereinheit (51; 151);
    eine zweite, auslaufseitige Erregereinheit (52; 152);
    eine erste, einlaufseitige Sensoreinheit (51; 151);
    eine zweite, auslaufseitige Sensoreinheit (52; 152); und
    eine Betriebs- und Auswerteschaltung;
    wobei der erste und zweite Lagerkörper (21; 121) mit dem Trägerkörper (30; 130) verbunden sind, wobei das Messrohr (10; 110) an dem ersten und zweiten Lagerkörper (22; 122) in der Weise gelagert ist, dass Biegeschwingungsmoden des Messrohrs (10; 110) an den Lagerkörpern Schwingungsknoten aufweisen, **dadurch gekennzeichnet, dass** die erste und zweite Erregereinheit (51, 52; 151; 152) jeweils dazu eingerichtet sind, in Abhängigkeit von Erregersignalen Biegeschwingungen des Messrohrs (10; 110) sowohl in der Messrohrebene als auch senkrecht zur Messrohrebene anzuregen,

die erste und zweite Sensoreinheit (51, 52; 151; 152) jeweils dazu eingerichtet sind, Biegeschwingungen des Messrohrs (10; 110) sowohl in der Messrohrebene als auch senkrecht zur Messrohrebene zu erfassen und schwingungsabhängige Sensorsignale auszugeben, und die Betriebs- und Auswerteschaltung dazu eingerichtet ist, Erregersignale an die Erregereinheiten zum selektiven Anregen von Biegeschwingungsmoden auszugeben und die Sensorsignale der Sensoreinheiten zu empfangen.

2. Messgerät (100; 200) nach Anspruch 1, wobei die Messrohrmittenlinie entweder bezüglich einer Messrohrquerebene, welche senkrecht zur Messrohrebene steht, symmetrisch verläuft, oder bezüglich einer Symmetrieachse die senkrecht zur Messrohrebene verläuft eine zweizählige Rotationssymmetrie aufweist, wobei die Betriebs- und Auswerteschaltung dazu eingerichtet ist, Erregersignale an die Erregereinheiten auszugeben, um symmetrische Biegeschwingungsmoden und/oder antisymmetrische Biegeschwingungsmoden anzuregen und/oder auszuwerten.

3. Messgerät (100; 200) nach Anspruch 1 oder 2, wobei das Messrohr (10; 110) zwischen der ersten Erregereinheit (51; 151) und der zweiten Erregereinheit (52; 152) bzw. zwischen der ersten Sensoreinheit (51; 151) und der zweiten Sensoreinheit (52; 152) eine homogene Massenverteilung aufweist, wobei an einem Trimmpunkt am Ort eines Schwingungsknotens antisymmetrischer Biegeschwingungsmoden eine Abweichung von der homogenen Massenverteilung gegeben ist.

4. Messgerät (100; 200) nach einem der Ansprüche 1 bist 3, wobei die Biegeschwingungsmoden Eigenfrequenzen $f_i$ aufweisen, wobei jeweils eine von einer Anregungsfrequenz $f_a$ abhängige Amplitude $A_i$ einer Biegeschwingungsmode gegeben ist als

$$A_i(f_a, f_i, Q_i) = \frac{k_i}{\left[\left(1-\left(\frac{f_a}{f_i}\right)^2\right)^2 + \left(\frac{\left(\frac{f_a}{f_i}\right)}{Q_i}\right)^2\right]^{1/2}},$$

wobei ki eine modenspezifische Konstante ist, wobei $Q_i$ eine modenspezifische Güte des Messrohrs beschreibt, wobei für die N Biegungsschwingungsmoden mit den N niedrigsten Eigenfrequenzen $f_i$, $f_j$ gilt:

$$\frac{A_i\left(\frac{f_i+f_j}{2}, f_i, Q_i\right)}{k_i \cdot Q_i} < s,$$

mit s < 2%, beispielsweise s < 1%, insbesondere s < 0,5%, und
mit N ≥ 5, beispielsweise N ≥ 8, insbesondere N ≥ 10.

5. Messgerät (100; 200) nach einem der vorhergehenden Ansprüche, wobei die Biegeschwingungsmoden Eigenfrequenzen $f_i$ aufweisen, wobei jeweils eine von einer Anregungsfrequenz $f_a$ abhängige Amplitude $A_i$ einer Biegeschwingungsmode gegeben ist als

$$A_i(f_a, f_1, Q_1) = \frac{k_i}{\left[\left(1-\left(\frac{f_a}{f_1}\right)^2\right)^2 + \left(\frac{\left(\frac{f_a}{f_1}\right)}{Q_1}\right)^2\right]^{1/2}},$$

wobei ki eine modenspezifische Konstante ist, wobei $Q_i$ eine modenspezifische Güte des Messrohrs beschreibt, wobei die Betriebs und Auswerteschaltung dazu eingerichtet ist, nur solche Biegeschwingungsmoden mit Eigenfrequenzen $f_i$, $f_j$ anzuregen, für die gilt:

$$\frac{A_i\left(\frac{f_i+f_j}{2}, f_i, Q_i\right)}{k_i \cdot Q_i} < s,$$

mit s < 1%, beispielsweise s < 0,5%, insbesondere s < 0,25%.

6. Messgerät (100; 200) nach einem der vorhergehenden Ansprüche, wobei das Messrohr einen Innendurchmesser aufweist, der nicht mehr als 6 mm, beispielsweise nicht mehr als 3 mm, insbesondere nicht mehr als 1 mm und in besonderen Fällen nicht mehr als 0,5 mm beträgt.

7. Messgerät (100; 200) nach einem der vorhergehenden Ansprüche, wobei die Erregereinheiten jeweils mindestens zwei piezoelektrische Elemente, die selektiv von der Betriebsund Auswerteschaltung mit einem Erregersignal zu treiben sind.

8. Messgerät (100; 200) nach einem der vorhergehenden Ansprüche, wobei die Sensoreinheiten jeweils mindestens zwei piezoelektrische Elemente aufweisen, deren Signale von der Betriebs- und Auswerteschaltung, erfassbar sind.

9. Messgerät (100; 200) nach einem der vorhergehenden Ansprüche, wobei die erste Sensoreinheit und die erste Erregereinheit in eine erste Sensor-Erreger-Einheit (51; 151) integriert sind, und wobei die zweite Sensoreinheit und die zweite Erregereinheit in eine zweite Sensor-Erreger-Einheit (52; 152) integriert sind.

**10.** Messgerät (100; 200) nach Anspruch 9, wobei die Sensor-Erreger-Einheiten piezoelektrische Elemente (1522a, 1522b, 1522c, 1522d; 1522a', 1522b', 1522c', 1522d'; 1522a", 1522b", 1522c", 1522d") aufweisen, die jeweils dazu eingerichtet sind, sowohl als Erreger als auch als Sensor zu wirken.

**11.** Messgerät (100; 200) nach Anspruch 9, wobei die Sensor-Erreger-Einheiten (51, 52; 151, 152) jeweils erste piezoelektrische Elemente (1522a, 1522b, 1522c, 1522d; 1522a', 1522b', 1522c', 1522d'; 1522a", 1522b", 1522c", 1522d") aufweisen, die dazu eingerichtet sind als Erreger (1522a, 1522b, 1522c, 1522d; 1522a', 1522b', 1522c', 1522d'; 1522a", 1522b", 1522c", 1522d") zu wirken, und wobei die Sensor-Erreger-Einheiten jeweils zweite piezoelektrische Elemente aufweisen, die dazu eingerichtet sind, als Sensor (1522a, 1522b, 1522c, 1522d; 1522a', 1522b', 1522c', 1522d'; 1522a", 1522b", 1522c", 1522d") zu wirken.

## Claims

**1.** Vibronic-type measuring device (100; 200) for determining a mass flow or a density of a fluid medium, said device comprising:

a measuring tube, which can oscillate (10; 110), and is curved in its rest position, wherein said tube is designed to conduct a medium, wherein the measuring tube (10; 110) has a measuring tube middle line extending in a measuring tube plane;
a support body (30; 130);
a first bearing body (21; 121) on the inlet side;
a second bearing body (22; 122) on the outlet side;
a first exciter unit (51; 151) on the inlet side;
a second exciter unit (52; 152) on the outlet side;
a first sensor unit (51; 151) on the inlet side;
a second sensor unit (52; 152) on the outlet side; and
an operating and evaluation circuit;
wherein the first and the second bearing body (21; 121) are connected to the support body (30; 130), wherein the measuring tube (10; 110) is mounted on the first and second bearing body (22; 122) in such a way that flexural vibration modes of the measuring tube (10; 110) have vibration nodes on the bearing bodies, **characterized in that** the first and the second exciter unit (51, 52; 151; 152) are both designed to excite flexural vibrations of the measuring tube (10; 110) both in the measuring tube plane and perpendicularly to the measuring tube plane, depending on exciter signals

the first and the second sensor unit (51, 52; 151; 152) are both designed to capture flexural vibrations of the measuring tube (10; 110) both in the measuring tube plane and perpendicularly to the measuring tube plane, and to output vibration-dependent sensor signals, and
the operating and evaluation circuit is designed to output excitation signals to the exciter units for the selective excitation of flexural vibration modes and to receive the sensor signals of the sensor units.

**2.** Measuring device (100; 200) as claimed in Claim 1, wherein the measuring tube middle line extends either symmetrically in relation to a measuring tube transverse plane, which is perpendicular to the measuring tube plane, or has a two-fold rotational symmetry in relation to an axis of symmetry that is perpendicular to the measuring tube plane, wherein the operating and evaluation circuit is designed to output excitation signals to the exciter units in order to excite and/or evaluate symmetric flexural vibration modes and/or antisymmetric flexural vibration modes.

**3.** Measuring device (100; 200) as claimed in Claim 1 or 2, wherein the measuring tube (10; 110) has a homogeneous mass distribution between the first exciter unit (51; 151) and the second exciter unit (52; 152) or between the first sensor unit (51; 151) and the second sensor unit (52; 152), wherein a deviation from the homogeneous mass distribution occurs at a trim point at the place of a vibration node of antisymmetric flexural vibration modes.

**4.** Measuring device (100; 200) as claimed in one of the Claims 1 to 3, wherein the flexural vibration modes have natural frequencies $f_i$, wherein an amplitude $A_i$ of a flexural vibration mode that is dependent on an excitation frequency $f_a$ is defined by the following formula:

$$A_i(f_a, f_i, Q_i) = \frac{k_i}{\left[\left(1 - \left(\frac{f_a}{f_i}\right)^2\right)^2 + \left(\frac{\left(\frac{f_a}{f_i}\right)}{Q_i}\right)^2\right]^{1/2}},$$

wherein $k_i$ is a mode-specific constant, wherein $Q_i$ describes a mode-specific quality of the measuring tube, wherein the following applies for the N flexural vibration modes with the N lowest natural frequencies $f_i$, $f_j$:

$$\frac{A_i\left(\frac{f_i+f_j}{2},f_i,Q_i\right)}{k_i \cdot Q_i} < s_,$$

with s < 2 %, for example s < 1 %, particularly s < 0.5 %, and
with N ≥ 5, for example N ≥ 8, particularly N ≥ 10.

5. Measuring device (100; 200) as claimed in one of the previous claims, wherein the flexural vibration modes have natural frequencies $f_i$, wherein an amplitude $A_i$ of a flexural vibration mode that is dependent on an excitation frequency $f_a$ is defined by the following formula:

$$A_i(f_a, f_1, Q_1) = \frac{k_i}{\left[\left(1-\left(\frac{f_a}{f_1}\right)^2\right)^2 + \left(\frac{\left(\frac{f_a}{f_1}\right)}{Q_1}\right)^2\right]^{1/2}},$$

wherein ki is a mode-specific constant, wherein $Q_i$ describes a mode-specific quality of the measuring tube,
wherein the operating and evaluation circuit is designed to only excite flexural vibration modes with natural frequencies $f_i$, $f_j$ for which the following applies:

$$\frac{A_i\left(\frac{f_i+f_j}{2},f_i,Q_i\right)}{k_i \cdot Q_i} < s,$$

with s < 1 %, for example s < 0.5 %, particularly s < 0.25 %.

6. Measuring device (100; 200) as claimed in one of the previous claims, wherein the measuring tube has an inner diameter that is not greater than 6 mm, for example not greater than 3 mm, particularly not greater than 1 mm and, in specific cases, not greater than 0.5 mm.

7. Measuring device (100; 200) as claimed in one of the previous claims, wherein the exciter units each have at least two piezoelectric elements that are to be excited selectively by the operating and evaluation circuit with an exciter signal.

8. Measuring device (100; 200) as claimed in one of the previous claims, wherein the sensor units each have at least two piezoelectric elements whose signals can be captured by the operating and evaluation circuit.

9. Measuring device (100; 200) as claimed in one of the previous claims,

wherein the first sensor unit and the first exciter unit are integrated into a first sensor-exciter-unit (51; 151), and
wherein the second sensor unit and the second exciter unit are integrated into a second sensor-exciter-unit (52; 152).

10. Measuring device (100; 200) as claimed in Claim 9, wherein the sensor-exciter-units have piezoelectric elements (1522a, 1522b, 1522c, 1522d; 1522a', 1522b', 1522c', 1522d'; 1522a", 1522b", 1522c", 1522d"), which are designed, in each case, to act as both an exciter and a sensor.

11. Measuring device (100; 200) as claimed in Claim 9,

wherein the sensor-exciter-units (51, 52; 151, 152) each have first piezoelectric elements (1522a, 1522b, 1522c, 1522d; 1522a', 1522b', 1522c', 1522d'; 1522a", 1522b", 1522c", 1522d") that are designed to act as an exciter (1522a, 1522b, 1522c, 1522d; 1522a', 1522b', 1522c', 1522d'; 1522a", 1522b", 1522c", 1522d"), and
wherein the sensor-exciter-units each have second piezoelectric elements that are designed to act as a sensor (1522a, 1522b, 1522c, 1522d; 1522a', 1522b', 1522c', 1522d'; 1522a", 1522b", 1522c", 1522d").

**Revendications**

1. Appareil de mesure (100 ; 200) du type à vibrations destiné à la détermination d'un débit massique ou d'une densité d'un produit fluide, lequel appareil comprend :

un tube de mesure apte à vibrer (10 ; 110), courbé dans sa position de repos, lequel tube est destiné à guider un produit, le tube de mesure (10 ; 110) présentant une ligne médiane de tube de mesure s'étendant dans un plan de tube de mesure ;
un corps de support (30 ; 130) ;
un premier corps de palier (21 ; 121) côté entrée ;
un deuxième corps de palier (22 ; 122) côté sortie ;
une première unité d'excitateur (51 ; 151) côté entrée ;
une deuxième unité d'excitateur (52 ; 152) côté sortie ;
une première unité de capteur (51 ; 151) côté entrée ;

une deuxième unité de capteur (52 ; 152) côté sortie ; et

un circuit d'exploitation et d'évaluation ;

le premier et le deuxième corps de palier (21 ; 121) étant reliés au corps de support (30 ; 130), le tube de mesure (10 ; 110) étant monté sur le premier et le deuxième corps de palier (22 ; 122) de telle sorte que les modes de vibration de flexion du tube de mesure (10 ; 110) présentent des noeuds de vibration sur les corps de palier, **caractérisé en ce que**

la première et la deuxième unité d'excitateur (51, 52 ; 151 ; 152) sont respectivement conçues pour exciter, en fonction de signaux d'excitation, des vibrations de flexion du tube de mesure (10 ; 110) aussi bien dans le plan du tube de mesure que perpendiculairement au plan du tube de mesure,

la première et la deuxième unité de capteur (51, 52 ; 151 ; 152) sont respectivement conçues pour mesurer des vibrations de flexion du tube de mesure (10 ; 110) aussi bien dans le plan du tube de mesure que perpendiculairement au plan du tube de mesure, et délivrer des signaux de capteur dépendant des vibrations, et

le circuit d'exploitation et d'évaluation est conçu pour délivrer des signaux d'excitation aux unités d'excitateur pour exciter sélectivement des modes de vibration de flexion et pour recevoir les signaux de capteur des unités de capteur.

2. Appareil de mesure (100 ; 200) selon la revendication 1, pour lequel la ligne médiane du tube de mesure s'étend soit symétriquement par rapport à un plan transversal du tube de mesure, lequel plan est perpendiculaire au plan du tube de mesure, soit ladite ligne présente une symétrie de rotation digyre par rapport à un axe de symétrie qui s'étend perpendiculairement au plan du tube de mesure, le circuit d'exploitation et d'évaluation étant conçu pour délivrer des signaux d'excitation aux unités d'excitateur afin d'exciter et/ou d'évaluer des modes de vibration de flexion symétriques et/ou des modes de vibration de flexion antisymétriques.

3. Appareil de mesure (100 ; 200) selon la revendication 1 ou 2, pour lequel le tube de mesure (10 ; 110) présente une répartition de masse homogène entre la première unité d'excitateur (51 ; 151) et la deuxième unité d'excitateur (52 ; 152) ou entre la première unité de capteur (51 ; 151) et la deuxième unité de capteur (52 ; 152), un écart par rapport à la répartition de masse homogène étant donné à un point d'ajustage à l'endroit d'un noeud de vibration de modes de vibration de flexion antisymétriques.

4. Appareil de mesure (100 ; 200) selon l'une des revendications 1 à 3, pour lequel les modes de vibration de flexion présentent des fréquences propres $f_i$, une amplitude $A_i$ d'un mode de vibration de flexion dépendant d'une fréquence d'excitation $f_a$ étant respectivement définie par la formule suivante :

$$A_i(f_a, f_i, Q_i) = \frac{k_i}{\left[\left(1-\left(\frac{f_a}{f_i}\right)^2\right)^2 + \left(\frac{\left(\frac{f_a}{f_i}\right)}{Q_i}\right)^2\right]^{1/2}},$$

où ki est une constante spécifique au mode, $Q_i$ décrivant une qualité spécifique au mode du tube de mesure, la relation suivante étant valable pour les N modes de vibration en flexion avec les N fréquences propres $f_i$, $f_j$ les plus basses :

$$\frac{A_i\left(\frac{f_i+f_j}{2}, f_i, Q_i\right)}{k_i \cdot Q_i} < s,$$

avec s < 2 %, par exemple s < 1 %, notamment s < 0,5 %, et

avec N $\geq$ 5, par exemple N $\geq$ 8, notamment N $\geq$ 10.

5. Appareil de mesure (100 ; 200) selon l'une des revendications précédentes, pour lequel les modes de vibration de flexion présentent des fréquences propres $f_i$, une amplitude $A_i$ d'un mode de vibration de flexion dépendant d'une fréquence d'excitation $f_a$ étant respectivement définie par la formule suivante :

$$A_i(f_a, f_1, Q_1) = \frac{k_i}{\left[\left(1-\left(\frac{f_a}{f_1}\right)^2\right)^2 + \left(\frac{\left(\frac{f_a}{f_1}\right)}{Q_1}\right)^2\right]^{1/2}},$$

où ki est une constante spécifique au mode, $Q_i$ décrivant une qualité spécifique au mode du tube de mesure,

le circuit d'exploitation et d'évaluation étant conçu pour n'exciter que les modes de vibration de flexion ayant des fréquences propres $f_i$, $f_j$ pour lesquelles on a la relation suivante :

$$\frac{A_i\left(\frac{f_i+f_j}{2}, f_i, Q_i\right)}{k_i \cdot Q_i} < s,$$

avec s < 1 %, par exemple s < 0,5 %, notamment s < 0,25 %.

**6.** Appareil de mesure (100 ; 200) selon l'une des revendications précédentes, pour lequel le tube de mesure présente un diamètre intérieur qui n'est pas supérieur à 6 mm, par exemple pas supérieur à 3 mm, notamment pas supérieur à 1 mm et, dans des cas particuliers, pas supérieur à 0,5 mm.

**7.** Appareil de mesure (100 ; 200) selon l'une des revendications précédentes, pour lequel les unités d'excitateur comprennent chacune au moins deux éléments piézoélectriques qui doivent être excités sélectivement par le circuit d'exploitation et d'évaluation avec un signal d'excitation.

**8.** Appareil de mesure (100 ; 200) selon l'une des revendications précédentes, pour lequel les unités de capteur présentent chacune au moins deux éléments piézoélectriques dont les signaux peuvent être mesurés par le circuit d'exploitation et d'évaluation.

**9.** Appareil de mesure (100 ; 200) selon l'une des revendications précédentes,

pour lequel la première unité de capteur et la première unité d'excitateur sont intégrées dans une première unité de capteur-excitateur (51 ; 151), et
pour lequel la deuxième unité de capteur et la deuxième unité d'excitateur sont intégrées dans une deuxième unité de capteur-excitateur (52 ; 152).

**10.** Appareil de mesure (100 ; 200) selon la revendication 9,
pour lequel les unités de capteur-excitateur comprennent des éléments piézoélectriques (1522a, 1522b, 1522c, 1522d ; 1522a', 1522b', 1522c', 1522d' ; 1522a", 1522b", 1522c", 1522d"), chacun étant conçu pour agir à la fois comme excitateur et comme capteur.

**11.** Appareil de mesure (100 ; 200) selon la revendication 9,

pour lequel les unités de capteur-excitateur (51, 52 ; 151, 152) comprennent chacune des premiers éléments piézoélectriques (1522a, 1522b, 1522c, 1522d ; 1522a', 1522b', 1522c', 1522d' ; 1522a", 1522b", 1522c", 1522d") conçus pour agir comme excitateurs (1522a, 1522b, 1522c, 1522d ; 1522a', 1522b', 1522c', 1522d' ; 1522a", 1522b", 1522c", 1522d"), et
pour lequel les unités de capteur-excitateur comprennent chacune des deuxièmes éléments piézoélectriques conçus pour agir en tant que capteur (1522a, 1522b, 1522c, 1522d ; 1522a', 1522b', 1522c', 1522d' ; 1522a",

1522b", 1522c", 1522d").

**Fig. 1**

**Fig. 2**

**Fig. 3a**

21  512a  51  511  11

512c  30

**Fig. 3b**

1522a  152  1522d  122  151  1511

121  112

1522b

1522c  130  111

**Fig. 3c**

1522d'  1522a'  121'  1522d'

1522b'

1522c'

**Fig. 3d**

1522a''  1522d''

121''  1522d''

1522b''  1522c''

OOP 1

OOP 2

OOP 3

OOP 4

OOP 5

IP 1

IP2

IP 3

IP 4

**Fig. 4a**

OOP 1

OOP 2

OOP 3

OOP 4

OOP 5

IP 1

IP 2

IP 3

IP 5

IP 6

**Fig. 4b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005059070 A1
- EP 1223412 A1
- US 20070095151 A
- US 6782764 B2